# EUROPÄISCHE PATENTANMELDUNG

(11) **EP 3 570 231 A1**
(43) Veröffentlichungstag der Anmeldung: **20.11.2019**
(21) Anmeldenummer: 18172321.4
(22) Anmeldetag: 15.05.2018
(51) Int. Cl.: G06Q 10/08, G07F 13/06

(54) **MEHRWEGSYSTEM FÜR ABFÜLLBARE PRODUKTE**

(71) Anmelder: Game Changer AG, 92660 Neustadt a.d. Waldnaab (DE)
(72) Erfinder: Krachtus, Werner, 92699 Bechtsrieth (DE)
(74) Vertreter: Lermer, Christoph

(57) **Zusammenfassung**

Ein System (1) zur Bereitstellung von Konsumgütern, insbesondere von abfüllbaren Lebensmitteln, umfasst: eine Verbraucherstation (3) mit einer Eingabeeinheit zur Bestellung eines Warenkorbs; eine zentrale Kommissionierstation (2) zur Kommissionierung von Waren zur Erstellung des bestellten Warenkorbs, wobei die zentrale Kommissionierstation (2) eine Datenverarbeitungseinheit (20) zur Erfassung von Bestellungen eines Warenkorbs mit wenigsten einem abfüllbaren Produkt seitens der Verbraucherstation (3) aufweist. Das System (1) weist eine Vielzahl standardisierter Mehrwegbehälter auf, und die Kommissionierstation (2) weist wenigstens eine Befüllstation (23a, 23b, 23c, 23d, 23e) zum Befüllen eines der Mehrwegbehälters mit dem bestellten abfüllbaren Produkt auf.

## Beschreibung

### TECHNISCHES GEBIET

Die Anmeldung bezieht sich auf ein System zur Bereitstellung von Konsumgütern, insbesondere von abfüllbaren Lebensmitteln, umfassend: eine Vielzahl von Verbraucherstationen; und eine zentrale Kommissionierstation zur Kommissionierung von Waren zur Erstellung des bestellten Warenkorbs. Die Anmeldung bezieht sich auch auf ein System zur Bereitstellung von Konsumgütern, insbesondere von abfüllbaren Lebensmitteln, umfassend: eine Verbraucherstation mit einer Eingabeeinheit zur Bestellung eines Warenkorbs; und eine zentrale Kommissionierstation zur Kommissionierung von Waren zur Erstellung des bestellten Warenkorbs, wobei die zentrale Kommissionierstation eine Datenverarbeitungseinheit zur Erfassung von Bestellungen eines Warenkorbs mit wenigsten einem abfüllbaren Produkt seitens der Verbraucherstation aufweist. Außerdem betrifft die Anmeldung ein Verfahren zur Bereitstellung von Konsumgütern, insbesondere von abfüllbaren Lebensmitteln, umfassend die folgenden Schritte: a) Übertragung von Daten zur Zusammenstellung eines Warenkorbs aus einer Vielzahl von Waren umfassend ein abfüllbares Produkt von der Verbraucherstation zu einer Datenverarbeitungseinheit einer Kommissionierstation; b) Übertragung von Steuerungsdaten an ein Behälterlager zur Auswahl eines für das bestellte abfüllbare Produkt geeigneten Mehrwegbehälters.

### STAND DER TECHNIK

Lebensmittel werden in der Regel über den Einzelhandel an die Endverbraucher abgegeben. Dabei liegen die Lebensmittel bereits in Abgabeeinheiten verpackt auf Lager. Die Verpackung eines Produkts ist einheitlich mit einer vorgegebenen Menge des Produkts. Es können aber auch unterschiedlichen Mengen/ Verpackungsgrößen eines Produkts vorliegen.

Durch das Vorhalten einer Vielzahl verpackter Produkte entsteht jedoch die Notwendigkeit, Lagersysteme bereitzustellen, die eine große Fläche benötigen. Ist die Lagerkapazität nicht ausreichend, so kann es vorkommen, dass bestimmte Produkte nicht zeitnah und/ oder nicht in der gewünschten Verpackungsgröße geliefert werden können. Dies ist problematisch, da Lebensmittel, insbesondere verderbliche Lebensmittel, in der Regel zeitnah in einer gewünschten Menge zur Verfügung stehen sollen. Ein Warenkorb sollte zudem zu einem feststehenden Zeitpunkt vollständig geliefert werden.

Nachteilig an bestehenden Systemen des Einzelhandels ist außerdem der hohe Aufwand an Verpackung (z.B. unterschiedliche Verpackungsgrößen, Aufmachung, Attraktivität der Verpackung, mehrfache Verpackung, z.B. Außenverpackung und Folienbeutel) auch für einfache Produkte wie Grundnahrungsmittel. Bis zur Abgabe an den Endverbraucher müssen die Produkte oft mehrfach kommissioniert, in andere Verpackungseinheiten umverpackt, in einem Ladengeschäft ausgepackt und platziert/ präsentiert werden.

Zuletzt fallen die Einzelverpackungen der ausgelieferten Produkte beim Verbraucher als Abfall an.

Alle diese Nachteile bestehender Lager-/ Logistiksysteme führen zu hohem technischen Aufwand, Energieaufwand, Platzbedarf, Aufwand bei der Abfallentsorgung und damit im Ergebnis zu hohen Kosten.

### AUFGABE DER ERFINDUNG

Ausgehend davon besteht die Aufgabe der vorliegenden Erfindung darin, ein umweltfreundliches System und Verfahren zur Bereitstellung von Konsumgütern, insbesondere von Lebensmitteln, mit vereinfachter Lagerhaltung vorzuschlagen.

### TECHNISCHE LÖSUNG

Diese Aufgabe wird gelöst durch ein System und ein Verfahren zur Bereitstellung von Konsumgütern, insbesondere von abfüllbaren Lebensmitteln, gemäß dem Anspruch 1 oder 4 bzw. gemäß dem Anspruch 10 oder 12. Vorteilhafte Ausführungsformen der Erfindung ergeben sich aus den Merkmalen der abhängigen Ansprüche.Das erfindungsgemäße System zur Bereitstellung von Konsumgütern, insbesondere von abfüllbaren Lebensmitteln, umfasst: eine Verbraucherstation; und eine zentrale Kommissionierstation zur Kommissionierung von Waren zur Erstellung des bestellten Warenkorbs, wobei das System eine Vielzahl standardisierter Mehrwegbehälter umfasst, und die Kommissionierstation wenigstens eine Befüllstation zum Befüllen eines der Mehrwegbehälters einem abfüllbaren Produkt aufweist.

Insbesondere kann die Verbraucherstation eine Eingabeeinheit zur Bestellung eines Warenkorbs aufweisen, und die zentrale Kommissionierstation kann eine Datenverarbeitungseinheit zur Erfassung von Bestellungen eines Warenkorbs mit wenigsten einem abfüllbaren Produkt seitens der Verbraucherstation aufweisen.

Der Begriff der Verbraucherstation ist im Rahmen der Erfindung in einem weiten Sinn zu verstehen. Die muss kein geschlossener Ort sein, sondern lediglich die Station darstellen, an die die Kommissionierstion die befüllten und kommissionierten Behälter abgibt. Dies kann z.B. auch ein Bereich eines Verkaufsladens sein.

Der Einsatz von Standardbehältern begünstigt den sicheren Transport und die einfache automatische Kommissionierbarkeit der Lebensmittel. Außerdem fördert der Einsatz von Mehrwegbehältern die Umweltfreundlichkeit (es entsteht kein Müll). Insbesondere vermeidet das System aufwändige Lagerung unterschiedlicher Verpackungsgrößen, aufwändiges Verpacken und Umverpacken (z.B. Folienbeutel), hohen Handhabungsaufwand, etc.. Die im erfindungsgemäßen System erforderlichen Lagerflächen sind im Vergleich zu Einwegsystemen mit verpackten Produkten gering, durch die Automatisierbarkeit der logistischen Vorgänge können Prozesse deutlich effizienter gestaltet werden.

Insbesondere zirkulieren die Mehrwegbehälter im System zwischen Verbraucherstationen und der zentralen Kommissionierstation. Zur Identifikation können die Mehrwegbehälter eine Kennzeichnung aufweisen, z.B. in Form eines RFID-Chips, eines Barcodes, ID-Codes, etc.. Auf diese Weise kann der Behälter getrackt werden und z.B. seine Benutzungshäufigkeit, seine Befüllung, etc. festgehalten werden.

Ein erfindungsgemäßes System zur Bereitstellung von Konsumgütern, insbesondere von abfüllbaren Lebensmitteln, umfasst: wenigstens eine Verbraucherstation, insbesondere aber eine Vielzahl von Verbraucherstationen, mit einer Eingabeeinheit zur Bestellung eines Warenkorbs; und eine zentrale Kommissionierstation zur Kommissionierung von Waren zur Erstellung des bestellten Warenkorbs, wobei die zentrale Kommissionierstation eine Datenverarbeitungseinheit zur Erfassung von Bestellungen eines Warenkorbs mit wenigsten einem abfüllbaren Produkt seitens der Verbraucherstation aufweist. Das System umfasst außerdem eine Vielzahl standardisierter Mehrwegbehälter, und die Kommissionierstation weist wenigstens eine Befüllstation zum Befüllen eines der Mehrwegbehälter mit dem bestellten abfüllbaren Produkt auf.

Der Begriff "Warenkorb" ist dabei abstrakt als eine Zusammenstellung wenigstens eines, insbesondere mehrerer bestellter Produkte anzusehen. Unter "Warenkorb" kann auch eine Liste der mit einem Auftrag bestellten Waren verstanden werden.

Das System zeichnet sich also dadurch aus, dass ein Warenkorb bestellt werden kann, in dem wenigstens ein abfüllbares Produkt in einer vom Verbraucher gewählten Verpackungsgröße vorhanden ist. Als abfüllbare Produkte sollen im Zusammenhang mit der Erfindung alle Lebensmittel und/oder Getränke gelten, die beispielsweise in flüssigem oder zähflüssigem Zustand oder als Schüttgut vorliegen und abfüllbar in einem Behälter, in einem Silo oder Tank aufbewahrt werden können. Entscheidend ist, dass das Abfüllen bzw. Befüllen standardisierter Mehrwegbehälter nach der von der Verbraucherstation durchgeführten Bestellung des Warenkorbs in der Kommissionierstation, also zeitnah und auf Basis der von der Datenverarbeitungseinheit zur Verfügung gestellten Steuerungsdaten, die auf Basis der Bestelldaten generiert werden, in einer Befüllstation stattfindet.

Die Mehrwegbehälter sind insbesondere standardisiert. Es können für verschiedene Produkte unterschiedliche Arten und Größen standardisierter Behälter vorliegen. So können beispielsweise für Reis wenigstens zwei unterschiedlich große Mehrwegbehälter vorgesehen sein. Nach der Bestellung wird ein der Bestellung entsprechender Behälter, z.B. aus einem Behälterlager, entnommen. Dies kann wiederum auf Basis von von der Datenverarbeitungseinheit zur Verfügung gestellten Steuerungsdaten bewerkstelligt werden. Andererseits können für verschiedene Produkte (z.B. Milch, Reis, Chips, Nudeln) oder Produktkonsistenzen (z.B. flüssig, zähflüssig, feines Schüttgut, grobes Schüttgut, Granulat) unterschiedliche Behältertypen und -größen bereitgestellt werden. Die verschiedenen Typen von Mehrwegbehältern könnten auch aus unterschiedlichen Materialien bestehen. Jedenfalls müssen sie jedoch effektiv gereinigt werden können, um für den Mehrweggebrauch geeignet zu sein. Dazu sind z.B. Glas-, Keramik-, Metall-, aber insbesondere Kunststoffbehälter geeignet.

Die abgefüllten Produkte können das Ergebnis eines oder mehrerer abgefüllter Komponenten sein. So wäre es denkbar, dass ein Produkt aus mehreren abfüllbaren Komponenten besteht. Auf diese Weise könnten unterschiedliche Varianten eines Produkts, z.B. Haarwaschmittel mit unterschiedlichen Gerüchen, Müsli mitunterschiedlichen Zusammensetzungen, etc. bereitgestellt werden. Auf diese Weise kann eine weitere Individualisierung der Produkte angeboten werden. Die Befüllung mit mehreren abfüllbaren Komponenten kann sequentiell oder gleichzeitig, z.B. aus einem Zusatztank, erfolgen. Unter Umständen ist nach dem Abfüllen ein Mischen der Komponenten im Standardbehälter, z.B. in einer Mischeinheit, vorgesehen.

Die Verbraucherstationen sind beispielsweise internetfähige Geräte (Mobiltelefon, Rechner), die jedenfalls eine Eingabeeinheit und ein Display aufweisen, sodass sowohl die Produktangebote abgerufen als auch Bestellungen aufgegeben werden können. Die Erfindung ist jedoch nicht auf bestimmte Bestellvorgänge beschränkt. Vielmehr können die Verbraucherstationen ihre Bestellungen auf unterschiedliche Art und Weise an die Kommissionierstation abgeben.

Die angebotenen Produkte können in geeigneter Weise präsentiert werden, z.B. durch Angabe der Marke oder durch Darstellung einer verpackten Produkteinheit.

Insbesondere weist das System eine Vielzahl von Verbraucherstationen und eine Datenaustauschverbindung zwischen den Verbraucherstationen und der zentralen Kommissionierstation zur Übermittlung eines Kommissionierauftrags auf.

Eine Bestellung kann beispielsweise per Internet erfolgen. Bei dieser Art der Bestellung können Präferenzen der einzelnen Kunden festgehalten und bei nachfolgenden Käufen Vorschläge für die Zusammenstellung von Warenkörben gemacht werden. Der Vorgang kann weitgehend automatisiert werden. Außerdem bietet das elektronische Anbieten bekannte Vorteile, nämlich die einfache und kostengünstige Vermittlung von Werbung, Verbrauchertips, etc., insbesondere gezielt, in Abhängigkeit von den Präferenzen der Kunden. Zudem können Kosten gespart werden, da der Einzelhandel und dessen Leistungen entfallen, und die Ware nicht aufwendig verpackt und präsentiert werden muss.

Die Datenverarbeitungseinheit ist zum Empfang und zur Verarbeitung einer Bestellung mit wenigstens einem abfüllbaren Produkt seitens der Verbraucherstation vorgesehen. Die Bestellung kann dabei, je nach Verfügbarkeit geeigneter Standardmehrwegbehälter für das Produkt, u.a. eine Auswahl der vom Verbraucher gewünschten Produktmenge ermöglichen. Die Menge des abfüllbaren Produkts kann dabei schrittweise vorgegeben sein, sie kann jedoch vorzugsweise auch innerhalb bestimmter Grenzen kontinuierlich auswählbar sein. So ist beispielsweise vorstellbar, dass ein Verbraucher eine beliebige Menge von Zucker zwischen 100 g und 1000 g bestellen kann. Eine für die Bestellmenge geeignete Mehrwegverpackung würde dann in der Befüllstation mit dem Produkt entsprechend befüllt werden. Der Preis für die Produktmenge könnte nach einem vorgegebenen Algorithmus bestimmt werden.

In der Befüllstation sind bestimmte Mengen der abfüllbaren Produkte, die angeboten werden, gelagert. Bei einer Bestellung einer bestimmten Produktmenge erhält die Befüllstation von der Datenverarbeitungseinheit auf Basis der Bestellung erstellte Steuerungsdaten, die die Befüllstation so steuern, dass die bestellte Menge des Produkts in den ebenfalls durch Steuerungsdaten bereitgestellten Mehrwegbehälter abgefüllt wird. Die Lagerung der Produkte kann in geeigneten Behältnissen wie Tanks oder Silos erfolgen.

Die zentrale Kommissionierstation stellt anschließend die Waren des bestellten Warenkorbs als Kunden- oder Auslieferungspaket unter Einschluss des bestellten abfüllbaren Produkts zusammen. Die Kommissionierstation ist so ausgelegt, dass sie auch kleine Pakete mit kleinen Produktmengen für Endkunden zusammenstellen kann. Der Versand der Waren eines Warenkorbs kann in Paketen oder in ebenfalls standardisierten Transferbehältern erfolgen. Insbesondere weist die wenigstens eine Befüllstation einen Behälter, einen Tank und/oder ein Silo zur Lagerung des abfüllbaren Produkts auf.

Vorzugsweise weist die Kommissionierstation wenigstens eine Etikettiereinheit zum Erstellen und/oder Anbringen eines Etiketts an dem einer Bestellung zugeordneten Mehrwegbehälter auf. Der Mehrwegbehälter wird, wie bereits beschrieben, entsprechend auf Basis der Bestellung von der Datenverarbeitungseinheit bereitgestellter Steuerungsdaten aus einem Behälterlager entnommen und der Etikettiereinheit zugeführt. Diese erhält ebenfalls von der Datenverarbeitungseinheit auf Basis der Bestellung bereitgestellte Steuerungsdaten, die die Etikettiereinheit so steuern, dass ein für das bestellte abfüllbare Produkt geeignetes Etikett erstellt und an dem bereitgestellten Mehrwegbehälter angebracht wird. Das Etikett enthält alle für den Verbraucher notwendigen Informationen (z.B. Produktart, Menge, Marke, gesetzlich vorgeschriebene Angaben, etc.), kann aber auch logistische Daten z.B. in Form eines Barcodes enthalten, die eine Zuordnung zur Bestellung erlauben. Gegebenenfalls kann das Etikett Steuerungsdaten für die nachfolgenden Stationen enthalten, sodass die Steuerungsdaten nicht direkt von der Datenverarbeitungseinheit an die nachfolgenden Stationen gesendet werden müssen, sondern über das Etikett indirekt an diese Stationen weitergegeben werden.

Die Etikettiereinheit soll im Rahmen der Erfindung nicht auf eine Einheit beschränkt sein, die Aufkleber an den Mehrwegbehältern anbringt. Vielmehr sollen auch andere Kennzeichnungsmöglichkeiten durch den Begriff abgedeckt sein, z.B. inForm von Banderolen, eines direkten Aufdrucks auf die Mehrwegverpackung, etc. Insbesondere soll die Kennzeichnung, wie auch immer sie ausgebildet ist, im Rahmen des Systems vor dem nächsten Einsatz/ Zyklus abwaschbar bzw. entfernbar sein, z.B. in der später beschriebenen Wasch-/ Sterilisiereinheit.

Vorzugsweise weist die Kommissionierstation wenigstens eine Kommissioniereinheit zur Zusammenstellung der Waren des bestellten Warenkorbs unter Einschluss des bestellten befüllten Mehrwegbehälters auf.

Es ist nicht zwingend erforderlich, dass ein bestimmter befüllter Behälter (z.B. genau der Behälter, dessen Befüllung durch den Auftrag getriggert bzw. veranlasst wurde) in das zu einer Bestellung gehörende Warenpaket gelangt. Vielmehr ist es auch möglich, dass ein kleiner Puffer vorhanden ist, in dem bereits befüllte Behälter gelagert sind. Die Kommissioniereinheit kann sich zur Zusammenstellung der Waren einer Bestellung (auch) aus diesem Lager bedienen. Der durch die Bestellung im System getriggerte Abfüllvorgang dient dann dazu, der Puffer mit einem bestellten abgefüllten Mehrwegbehälter wieder aufzustocken. In dieser Ausführungsform besteht zwar ein gewisser Lagerbedarf. Dieser kann jedoch sehr begrenzt ausfallen, da das Lager praktisch ,just-in-time" mit bestellten Produkten nachbestückt wird. Die Kommissionierstation kann wenigstens eine Wasch-/ Sterilisiereinheit zum Waschen und/oder Sterilisieren gebrauchter, von den Verbraucherstationen in die Kommissionierstation zurück transportierter Mehrwegbehälter aufweisen. Nach dem Reinigen gelangen die Behälter in das Behälterlager, um von dort den Kreislauf erneut zu durchlaufen. Die Mehrwegbehälter zirkulieren somit in einem Materialkreislauf so lange, bis sie aus dem System entnommen werden.

Die Datenverarbeitungseinheit kann dazu ausgebildet sein, eine Bestellung zu verarbeiten und Steuerungsdaten an ein Behälterlager mit gereinigten Mehrwegbehältern, an die Etikettiereinheit, an die wenigstens eine Befüllstation, und/oder an die Kommissioniereinheit zu übermitteln. Die Übermittlung der Daten kann dabei direkt an die Stationen/Einheiten oder indirekt über eine andere Station/Einheit erfolgen. Ein erfindungsgemäßes Verfahren zur Bereitstellung von Konsumgütern, insbesondere von abfüllbaren Lebensmitteln, umfasst die folgenden Schritte: a) Bereitstellen eines Systems wie oben beschrieben; b) Befüllen wenigstens eines Mehrwegbehälters mit dem abfüllbaren Produkt in einer Befüllstation; und c) Transport des befüllten Mehrwegbehälters von der zentralen Kommissionierstation zur Verbraucherstation; und d) Rücktransport des Mehrwegbehälters von der Verbraucherstation zur zentralen Kommissionierstation.

Das Verfahren kann insbesondere ein Zirkulieren der Mehrwegbehälter zwischen Verbaucherstationen und der zentralen Kommissionierstation umfassen.

Ein erfindungsgemäßes Verfahren zur Bereitstellung von Konsumgütern, insbesondere von abfüllbaren Lebensmitteln, umfasst die folgenden Schritte: a) Übertragung von Daten zur Zusammenstellung eines Warenkorbs aus einer Vielzahl von Waren umfassend ein abfüllbares Produkt von der Verbraucherstation zu einer Datenverarbeitungseinheit einer Kommissionierstation; b) Übertragung von Steuerungsdaten von der Datenverarbeitungseinheit an ein Behälterlager zur Auswahl eines für das bestellte abfüllbare Produkt geeigneten Mehrwegbehälters; c) Befüllen des Mehrwegbehälters mit dem abfüllbaren Produkt in einer Befüllstation; und d) Zusammenstellung des bestellten Warenkorbs unter Einschluss des bestellten befüllten Mehrwegbehälters in einer Kommissioniereinheit.

Das Verfahren kann als weiteren Schritt die Übertragung von Steuerungsdaten an eine Etikettiereinheit zum Erstellen und/oder Anbringen eines dem bestellten abfüllbaren Produkt entsprechenden Etiketts an den im Schritt b) ausgewählten Mehrwegbehälter umfassen. Das Etikett wird dem passenden Auftrag/ Auftraggeber/ Warenkorb zugeordnet. Es kann unterschiedliche Angaben zum Produkt (z.B. Produktart, Marke und sonstige bei Lebensmitteln vorgeschriebene Angaben), aber auch Steuerungsdaten für die Handhabung der Prudukteinheit im System enthalten.

Das Verfahren kann als weiteren Schritt den Transfer des in der Kommissioniereinheit zusammengestellten Warenkorbs an eine Auslieferungseinheit zur Auslieferung an eine durch die Bestellung vorgegebene Verbraucherstation aufweisen.

Das Verfahren kann als weiteren Schritt den Transfer eines von der Verbraucherstation an die Kommissionierstation zurück transferierten Mehrwegbehälters von einer Leergutaufnahmeeinheit zu einer Wasch-/ Sterilisiereinheit zum Waschen und/oder Sterilisieren des Mehrwegbehälters aufweisen. Damit können die Behälter vielfach verwendet und die Entstehung von Verpackungsabfall vermieden werden. Die Behälter sind standardisiert und zum mehrfachen Einsatz innerhalb des Systems vorgesehen.

Durch flexible Bestellmengen ist das System auch Ressourcen schonend. Im herkömmlichen Einzelhandel fallen große Mengen an Waren an, die nicht verbraucht werden. Dieses Problem kann durch flexible oder in vielen Schritten auswählbare Produktmengen verringert werden.

Durch das Verfahren können Kosten eingespart werden, die beispielsweise durch die längerfristige Lagerung, durch Warenpräsentation und besonders durch die Verpackung entstehen. Da es im Rahmen der Erfindung vermieden wird, vorgegebene Packungsgrößen zu lagern und auszustellen, wird die Lagermenge reduziert und der Kunde kann eine benötigte Menge des Produkts bestellen.

### KURZE BESCHREIBUNG DER FIGUREN

Weitere Merkmale und Vorteile der Erfindung werden aus der nachfolgenden Beschreibung anhand der beigefügten Figuren deutlich. Es zeigen:
Figur 1 eine schematische Darstellung einer ersten Ausführungsform eines erfindungsgemäßen Systems zur Bereitstellung von Lebensmitteln;
Figur 2 einen Ausschnitt des Systems aus der Figur 1;
Figur 3 eine schematische Darstellung einer zweiten Ausführungsform eines erfindungsgemäßen Systems zur Bereitstellung von Lebensmitteln;
Figur 4 einen im Zusammenhang mit den Systemen aus den Figuren 1 bis 3 verwendeten Behälter im zusammengebauten Zustand; und
Figur 5 einen im Zusammenhang mit den Systemen aus den Figuren 1 bis 3 verwendeten Behälter im auseinandergebauten Zustand.

### DETAILLIERTE BESCHREIBUNG EINES BEVORZUGTEN AUSFÜHRUNGSBEISPIELS

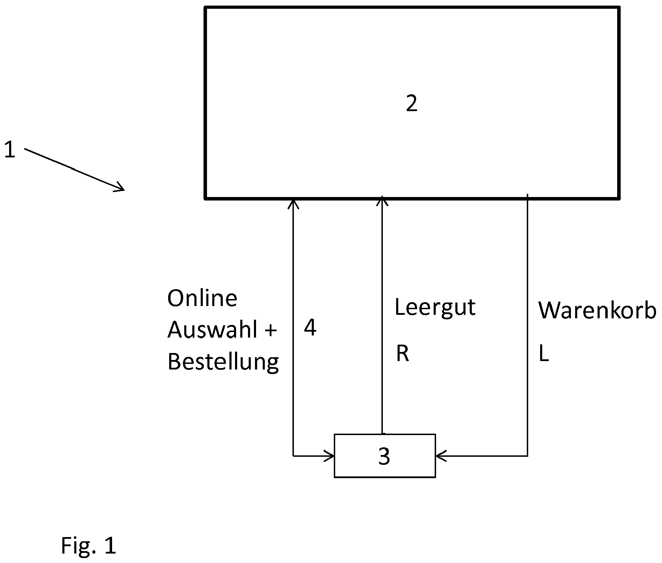

Die Figur 1 zeigt schematisch ein erfindungsgemäßes System 1 zur Bereitstellung von in Behältern abfüllbaren Lebensmitteln für Endverbraucher. Das System 1 weist eine zentrale Kommissionierstation 2 und wenigstens eine (vorzugsweise aber eine Vielzahl) dezentrale Verbraucherstation 3 auf.

Die zentrale Kommissionierstation 2 ist insbesondere eine (weitgehend) automatisierte Logistikanlage, die entsprechend individuellen Aufträgen/ Kundenbestellungen Warenkörbe für Endverbraucher zusammenstellt.

Zwischen der Kommissionierstation 2 und den vorzugsweise mehreren Verbraucherstationen (von denen hier beispielhaft eine Verbraucherstation 3 dargestellt ist) findet ein Warenaustausch und ein Informationsaustausch statt. Der Warenaustausch wird mittels einer Vielzahl von Mehrwegbehältern bewerkstelligt, die im System 1 zirkulieren, wobei die Behälter in einem ersten Abschnitt des Kreislaufs mit einem Produkt befüllt, in einem zweiten Abschnitt des Kreislaufs weitgehend leer sind.

Der Transport zwischen den Stationen 2 und 3 kann mittels Fahrzeugen erfolgen. Dabei wird ein Warenkorb zu einer Verbraucherstation 3 transportiert (Pfeil L) und Leergut zur Kommissionierstation 2 zurück befördert (Pfeil R). Eine spezielle Möglichkeit besteht im Transport mittels autonomer Mobilität. Der Transport innerhalb der Kommissionierstation 2 kann unter anderem über Transport- oder Förderbänder o. ä. erfolgen.

Der Informationsaustausch erfolgt über elektronischen Datenaustausch mittels eines Kommunikationssystems 4. Das Kommunikationssystem 4 kann drahtlose Verbindungen (z.B. W-LAN, Mobilfunk) und/oder Verbindungen über Datenleitungen umfassen. Das Kommunikationssystem umfasst außerdem Sende- und Empfangsstationen.

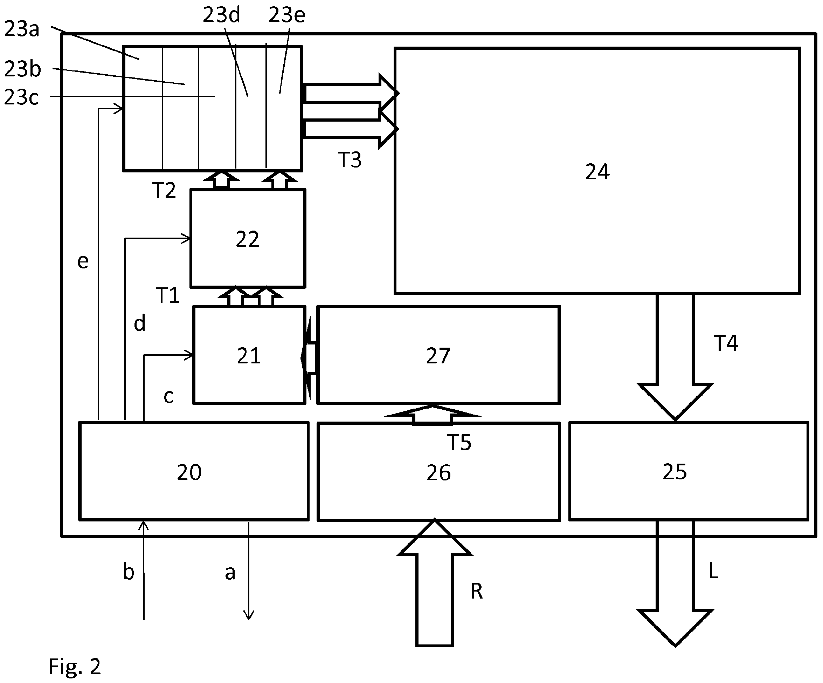

Die Kommissionierstation 2 weist, wie in der Figur 2 dargestellt, eine Datenverarbeitungseinheit 20 auf. Die Kommissionierstation 2 weist außerdem ein Behälterlager 21, eine Etikettiereinheit 22, wenigstens eine Befüllstation 23a, 23b, 23c, 23d, 23e, eine Kommissioniereinheit 24, eine Auslieferungseinheit 25, eine Leergutaufnahmeeinheit 26 und eine Wasch-/ Sterilisiereinheit 27 auf.

Die Datenverarbeitungseinheit 20 erfüllt wenigstens die folgenden Aufgaben. In der Datenverarbeitungseinheit 20 ist ein Katalog abfüllbarer Produkte hinterlegt, aus denen ein Benutzer von der Verbraucherstation 3 aus Produkte in vorgegebenen oder frei bestimmbaren Mengen auswählen kann. Das online-Angebot ist durch den mit dem Buchstaben a gekennzeichneten Pfeil symbolisiert. Das Warenangebot und die Warenpräsentation können, basierend auf vom Endverbraucher bereitgestellten Informationen oder abgeleitet aus dem früheren Kaufverhalten des Endverbrauchers, an den einzelnen Verbraucher angepasst werden.

Nach Auswahl eines oder mehrerer der abfüllbaren Produkte gibt der Benutzer von der Verbraucherstation 3 aus elektronisch eine Bestellung, dargestellt durch den mit dem Buchstaben b gekennzeichneten Pfeil, auf. Diese Bestellung wird durch die Datenverarbeitungseinheit 20 aufgenommen und als Auftrag zur Erstellung eines Warenkorbs bearbeitet. Die Zahlungsabwicklung kann in bekannter Weise, wie etwa in Internet-Verkaufssystemen (Internet-Shops), erfolgen.

Die Datenverarbeitungseinheit 20 gibt entsprechend dem Auftrag direkt oder indirekt Steuerungsdaten bzw. Befehle an das Behälterlager 21 (Pfeil c), die Etikettiereinheit 22 (Pfeil d), und wenigstens eine der Befüllstationen 23a, 23b, 23c, 23d, 23e (Pfeil e) weiter. Die Daten für das Behälterlager 21 beinhalten Informationen zum Auftrag (z.B. Auftragsnummer) und zur Auswahl des für die ausgewählten Produktart und -menge benötigten Behälters. Die Daten für die Etikettiereinheit 22 beinhalten Informationen zum Auftrag (z.B. Auftragsnummer), insbesondere zu den ausgewählten Produkten. Die Daten für die Befüllstationen 23a, 23b, 23c, 23d, 23e beinhalten Informationen zum Auftrag (z.B. Auftragsnummer), insbesondere zu den ausgewählten Produkten und deren Abfüllmengen.

Nachdem die Daten an das Behälterlager 21 übermittelt wurden, werden die benötigten Behälter an die Etikettiereinheit 22 weitergegeben (Pfeile T1). Dort werden die Behälter etikettiert. Das jeweilige Etikett enthält wenigstens Informationen zum Produkt, z.B. Marke, insbesondere Art und Menge der Befüllung, sowie alle für das entsprechende Produkt vorgeschriebenen Produktinformationen. Anschließend gelangt jeder der dem Auftrag zugeordneten Behälter zu wenigstens einer der Befüllstationen 23a, 23b, 23c, 23d, 23e (Pfeil T2).

Es gibt insbesondere verschiedene Behälter bezüglich Füllmenge und Füllstoff, z.B. zähflüssige Stoffe, flüssige Stoffe, Schüttgut, Granulat (ggf. für verschiedene Feinheitsgrade), etc.. Die Behälter eines Typs sind jedoch jeweils standardisiert und zum mehrfachen Einsatz innerhalb des Systems vorgesehen.

In den Befüllstationen 23a, 23b, 23c, 23d, 23e werden die dem Auftrag zugeordneten Behälter mit den entsprechenden Produkten und Produktmengen befüllt. Voraussetzung für eine Befüllung ist, dass das Produkt lose in einem Lagerbehälter, z.B. einem Silo oder Tank, aufbewahrt und in eine kleinere Behältereinheit abgefüllt werden kann. Diese Voraussetzung erfüllen insbesondere Flüssigkeiten mit ausreichend niedriger Viskosität, wie Milch, Joghurt, Saft, etc., aber auch Schüttgut, wie Cornflakes, Müsli, bestimmte Süßigkeiten, Zucker, Mehl, etc.. Informationen zur Befüllung haben die Befüllstationen 23a, 23b, 23c, 23d, 23e direkt oder indirekt, z.B. via Etikettierstation 22, erhalten. Insbesondere können die für die Befüllstationen 23a, 23b, 23c, 23d, 23e notwendigen Informationen auch auf dem am Behälter angebrachten Etikett, z.B. in Form eines Barcodes, enthalten sein. Indem diese Etiketten an der jeweiligen Befüllstation 23a, 23b, 23c, 23d, 23e ausgelesen werden, können die Informationen zu jedem einzelnen Behälter zur jeweiligen Befüllstation 23a, 23b, 23c, 23d, 23e gelangen.

Die Etikettierung kann prinzipiell vor oder nach dem Befüllen der Behälter erfolgen. Bei einer Etikettierung nach dem Befüllen in der Befüllstation 23a, 23b, 23c, 23d, 23e können allerdings die Befüllstationen 23a, 23b, 23c, 23d, 23e die erforderlichen Informationen nicht dem Etikett entnehmen, d.h. sie müssen beispielsweise die erforderlichen Informationen, wie durch den Pfeil e angedeutet, direkt von der Datenverarbeitungseinheit 20 erhalten und den ankommenden Behältern die jeweils richtigen Befüllinformationen zuordnen.

Prinzipiell ist es denkbar, dass jedem der im System 1 verwendeten Behälter eine Identifikationsnummer zugeordnet ist. Die Identifikationsnummer kann verwendet werden, um den Warenstrom zu steuern und die von der Datenverarbeitungseinheit 20 ausgegebenen Steuerungsdaten/ Befehle dem richtigen Behälter zuzuordnen.

Anschließend werden die befüllten Mehrwegbehälter in die Kommissioniereinheit 24 weitertransportiert (Pfeil T3). Aus den dort angelangten Behältern stellt die Kommissioniereinheit 24 einen Warenkorb zusammen. Ein Warenkorb ist in erster Linie eine Gruppe von Produkten, die dem Auftrag entsprechen. Neben den abgefüllten Waren kann ein Warenkorb noch zusätzliche Waren enthalten, z.B. aus einem Warenlager (nicht dargestellt) entnommene, vorverpackte Waren. Die Waren des dem Auftrag entsprechenden Warenkorbs können in einem beliebigen größeren Behälter (Sammelbehälter) zusammengestellt werden.

An jedem kommissionierten Warenkorb kann eine zusätzliche Markierung (bspw. ein Barcode oder RFID-Chip) angebracht werden, die eine spätere Zuordnung des Warenkorbs zum entsprechenden Auftrag und zur Person des Auftraggebers erlaubt. Außerdem kann die Markierung Informationen enthalten, wohin der Warenkorb geliefert oder wo er zur Abholung durch einen Verbraucher zwischengelagert werden soll. Jeder Warenkorb kann als Transferbehälter wie unten beschrieben konzipiert sein.

Anschließend wird der Warenkorb an eine Auslieferungseinheit 25 weitergegeben (Pfeil T4) und von dort an die dem Auftrag zugeordnete Verbraucherstation 3 geliefert (Pfeil L).

Nachdem die Mehrwegbehälter des Warenkorbs entleert sind, werden die Mehrwegbehälter wieder zur Kommissionierstation 2 zurück transportiert (Pfeil R), insbesondere zu einer Leergutaufnahmeeinheit 26.

Die Behälter werden anschließend in eine Wasch-/ Sterilisiereinheit 27 verbracht (Pfeil T5) und dort gereinigt und/oder sterilisiert. Danach werden die gereinigten Behälter im Behälterlager 21 gelagert, bis durch einen entsprechenden Auftrag geeignete Behältertypen abgerufen und in die Etikettierstation 22 verbracht werden.

Auf diese Weise durchlaufen die Behälter das System 1 zyklisch, d.h. die Mehrwegbehälter zirkulieren im System, bis sie ausgemustert und/oder ersetzt werden.

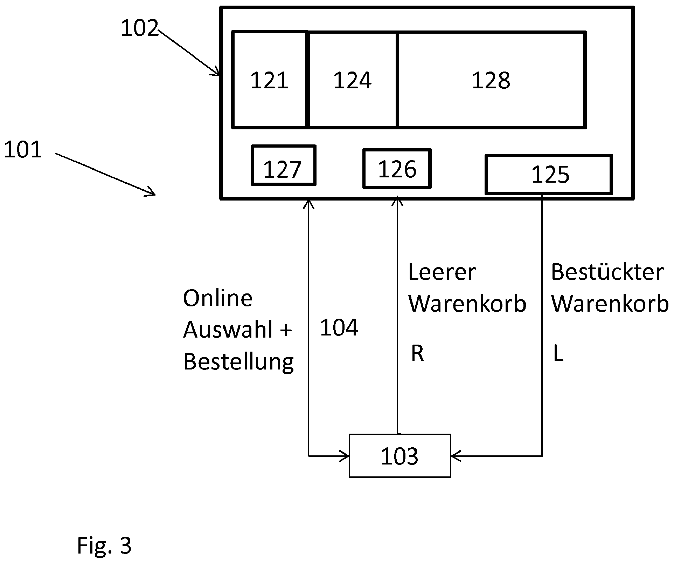

Die Figur 3 zeigt ein weiteres erfindungsgemäßes System 101, das dem oben geschilderten System 1 weitgehend entspricht.

Das System 101 weist eine zentrale Kommissionierstation 102 und wenigstens eine dezentrale Verbraucherstation 103 sowie ein Datenkommunikationssystem 104 entsprechend dem Datenkommunikationssystem 4 der Figur 1 auf. Der Angebots- und Bestellvorgang läuft wie im System 1 gemäß der Beschreibung der Figuren 1 und 2 ab.

Die Kommissionierstation 102 weist eine Kommissioniereinheit 124 (entsprechend der Einheit 24 aus dem System 1 gemäß den Figuren 1 und 2) auf. An die Kommissioniereinheit 124 angeschlossen ist ein Warenlager. Anders als im System 1 hat das System 101 nicht zwingend Befüllstationen. Vielmehr bedient sich die die Kommissioniereinheit 124 aus einem ihm angeschlossenen Warenlager 128 mit bereits verpackten Waren, um einen Warenkorb zusammenzustellen. Das System 101 kann jedoch zusätzlich einzelne oder alle Komponenten und Stationen des Systems 1 gemäß der ersten Ausführungsform der Erfindung aufweisen.

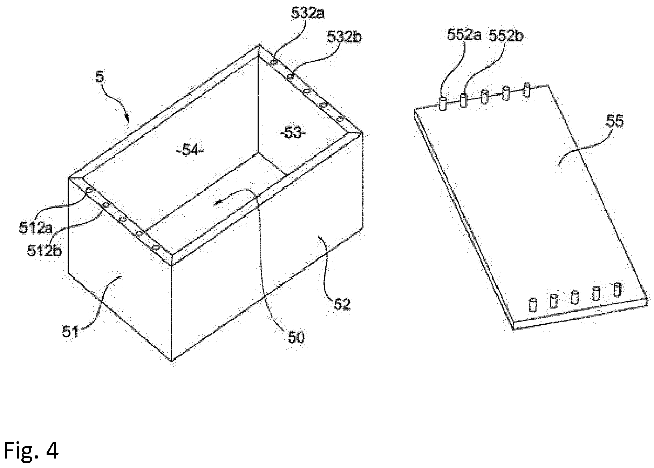

Die Kommissionierstation 102 weist darüber hinaus eine Auslieferungseinheit 125 zur Auslieferung bestückter Warenkörbe an jeweilige Verbraucherstationen 103 auf. Die Besonderheit an diesem System 101 ist, dass die Waren eines Auftrags (Warenkörbe) in speziellen Warenbehältern 5 (vgl. Fig. 4) gesammelt werden und in diesen von der Auslieferungseinheit 125 zur jeweiligen Verbraucherstation 103 transportiert werden. Insbesondere werden in dem System 101 die Komponenten 50, 51, 52, 53, 54, 55 der standardisierten Warenbehälter 5 als Mehrwegkomponenten eingesetzt, d.h. die Komponenten 50, 51, 52, 53, 54, 55 zirkulieren im System 101, teilweise mit anderen Mehrwegkomponenten zusammengebaut zu Warenbehältern 5 oder als nicht montierte Mehrweg-Komponenten 50, 51, 52, 53, 54, 55.

So kann in einer Verbraucherstation 103, nachdem der Warenbehälter 5 entleert wurde, der Warenbehälter 5 auseinander gebaut und die einzelnen Komponenten 50, 51, 52, 53, 54, 55 zurück zur Kommissioniereinheit 102, insbesondere zu einer Aufnahmeeinheit 126 für leere Warenbehälter 5, transportiert werden. Alternativ dazu kann jedoch der Warenbehälter 5 auch in einem zusammengebauten Zustand zur Aufnahmeeinheit 126 für leere Warenbehälter 5 transportiert werden. Der Warenbehälter 5 wird jedoch spätestens vor dem Einlagern des Warenbehälters 5 bzw. seiner Komponenten 50, 51, 52, 53, 54, 55 in einem Behälterlager 121 auseinandergebaut. Erst wenn ein bestimmter Behälter 5 in der Kommissioniereinheit 124 benötigt wird, wird dieser aus den passenden Komponenten 50, 51, 52, 53, 54, 55 zusammengebaut. Auf diese Weise wird der Platzbedarf für die Lagerung der Behälter 5 reduziert.

Vor der Einlagerung kann außerdem der Warenbehälter 5 in einer Wasch-/ Sterilisiereinheit 127 gewaschen und/oder sterilisiert werden. Dieser Vorgang findet vorzugsweise ebenfalls statt, nachdem der Behälter 5 in seine einzelnen Komponenten 50, 51, 52, 53, 54 zerlegt wurde. Eine Reinigung weitgehend flacher Boden-, Wand- und ggf. Deckelteile 50, 51, 52, 53, 54, 55 ist wesentlich einfacher und gründlicher zu bewerkstelligen als die Reinigung zusammengebauter Behälter 5.

Wie durch den Pfeil L der Figur 3 angedeutet, wird ein zusammengebauter und bestückter Warenkorb, umfassend einen Warenbehälter 5 etwa wie im Zusammenhang mit der Figur 4 beschrieben, an eine Verbraucherstation 103 geliefert (Pfeil L). Der Verbraucher entnimmt dem Warenkorb 5 die bestellten Waren. Anschließend wird der Warenbehälter 5, sei es zusammengebaut oder in Einzelkomponenten, wieder in die Kommissioniereinheit verbracht (Pfeil R).

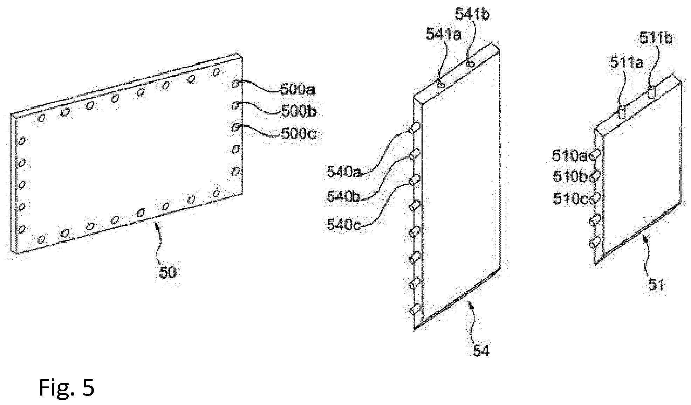

Die Figuren 4 und 5 zeigen beispielhaft einen Warenbehälter 5, wie er im System 101 zum Einsatz kommt, im zusammengesetzten und im unmontierten/ zerlegten Zustand.

Die Figur 4 zeigt einen Warenbehälter 5, der aus einem Bodenteil 50, vier Wandteilen 51, 52, 53, 54 und optional einem Deckelteil 55, besteht. Die Komponenten 50, 51, 52, 53, 54 sind montiert, um den Grundbehälter 5 zu bilden. So können die Komponenten 50, 51, 52, 53, 54 beispielsweise über Steckverbindungen miteinander verbunden sein.

Das Deckelteil 55 ist in diesem Beispiel abgenommen. Die beiden Wandteile 51 und 53 weisen in diesem Beispiel Steckanschlüsse 512a, 512b,... bzw. 532a, 532b,... auf (diese sind der Einfachheit halber als Aufnahmen skizziert). Das Deckelteil 55 weist dazu passende komplementäre Steckanschlüsse 552a, 552b,... auf. Um ausreichende Stabilität der Steckverbindungen zu gewährleisten, können diese mit geeigneten Rastmitteln und/oder Arretierungsmitteln versehen sein.

In der Figur 5 sind beispielhaft und schematisch die Komponenten Bodenteil 50 und zwei der Wandteile 51, 54 dargestellt. Das Bodenteil 50 weist entlang seines Randbereichs Steckanschlüsse 500a, 500b, 500c,... auf, die im zusammengebauten Zustand in einer Steckverbindung oder Rastverbindung mit entsprechenden komplementären Steckanschlüssen 540a, 540b, 540c, ... bzw. 510a, 510b, 510c,... der Wandteile 54 bzw. 51 in Eingriff stehen. Die Wandteile 54 können entlang des dem benachbarten Wandteil 51 zugewandten Rands weitere Steckanschlüsse 541, 541b,... zum Anschluss komplementärer Steckanschlüsse 541a, 541b,... des benachbarten Wandteils 51 aufweisen.

Je nachdem in welcher Station oder zwischen welchen Stationen sich der Warenbehälter 5 im System 101 befindet, steht er entweder im montierten oder im unmontierten Zustand bereit.

Insbesondere ist der Behälter 5 ein standardisierter Behälter, d.h. wenigstens Gruppen von Behältern sind baugleich. Außerdem sind die Komponenten des Behälters 5 standardisiert, d.h. wenigstens Gruppen von Komponenten sind baugleich. Durch den modularen Aufbau der Behälter 5 können aus Standardkomponenten verschiedene Behälter montiert werden. So kann das System 101 beispielsweise Seitenwände 51, 52, 53, 54 unterschiedlicher Höhe aufweisen, sodass ein Behälter 5 mit einem standardisierten Bodenteil 50 und, je nach dem für eine Warenbestellung erforderlichen Platzbedarf, mit geeigneter Wandhöhe bereitgestellt werden kann.

## Patentansprüche

1. System (1) zur Bereitstellung von Konsumgütern, insbesondere von abfüllbaren Lebensmitteln, umfassend:
eine Vielzahl von Verbraucherstationen (3); und
eine zentrale Kommissionierstation (2) zur Kommissionierung von Waren zur Erstellung des bestellten Warenkorbs,
**dadurch gekennzeichnet, dass**
das System (1) eine Vielzahl standardisierter Mehrwegbehälter umfasst, und die Kommissionierstation (2) wenigstens eine Befüllstation (23a, 23b, 23c, 23d, 23e) zum Befüllen eines der Mehrwegbehälters einem abfüllbaren Produkt aufweist.

2. System (1) nach Anspruch 1,
**dadurch gekennzeichnet, dass**
die Verbraucherstation (3) eine Eingabeeinheit zur Bestellung eines Warenkorbs aufweist, und die zentrale Kommissionierstation (2) eine Datenverarbeitungseinheit (20) zur Erfassung von Bestellungen eines Warenkorbs mit wenigsten einem abfüllbaren Produkt seitens der Verbraucherstation (3) aufweist.

3. System nach einem der vorhergehenden Ansprüche,
**dadurch gekennzeichnet, dass**
die Mehrwegbehälter im System zwischen den Verbaucherstationen (3) und der zentralen Kommissionierstation (2) zirkulieren.

4. System (1) zur Bereitstellung von Konsumgütern, insbesondere von abfüllbaren Lebensmitteln, umfassend:
eine Verbraucherstation (3) mit einer Eingabeeinheit zur Bestellung eines Warenkorbs; und
eine zentrale Kommissionierstation (2) zur Kommissionierung von Waren zur Erstellung des bestellten Warenkorbs,
wobei die zentrale Kommissionierstation (2) eine Datenverarbeitungseinheit (20) zur Erfassung von Bestellungen eines Warenkorbs mit wenigsten einem abfüllbaren Produkt seitens der Verbraucherstation (3) aufweist;
**dadurch gekennzeichnet, dass**
das System (1) eine Vielzahl standardisierter Mehrwegbehälter umfasst, und die Kommissionierstation (2) wenigstens eine Befüllstation (23a, 23b, 23c, 23d, 23e) zum Befüllen eines der Mehrwegbehälters mit dem bestellten abfüllbaren Produkt aufweist.

5. System (1) nach einem der vorhergehenden Ansprüche,
**dadurch gekennzeichnet, dass**
die wenigstens eine Befüllstation (23a, 23b, 23c, 23d, 23e) einen Behälter, einen Tank und/oder ein Silo zur Lagerung des abfüllbaren Produkts aufweist.

6. System (1) nach einem der vorhergehenden Ansprüche,
**dadurch gekennzeichnet, dass**
die Kommissionierstation (2) wenigstens eine Etikettiereinheit (22) zum Erstellen und/oder Anbringen eines Etiketts an dem Mehrwegbehälter aufweist.

7. System (1) nach einem der vorhergehenden Ansprüche,
**dadurch gekennzeichnet, dass**
die Kommissionierstation (2) wenigstens eine Kommissioniereinheit (24) zur Zusammenstellung des bestellten Warenkorbs unter Einschluss des bestellten befüllten Mehrwegbehälters aufweist.

8. System (1) nach einem der vorhergehenden Ansprüche,
**dadurch gekennzeichnet, dass**
die Kommissionierstation (2) wenigstens eine Wasch-/ Sterilisiereinheit (27) zum Waschen und/oder Sterilisieren gebrauchter, von den Verbraucherstationen (3) in die Kommissionierstation (2) zurück transportierter Mehrwegbehälter aufweist.

9. System (1) nach einem der vorhergehenden Ansprüche,
**dadurch gekennzeichnet, dass**
die Datenverarbeitungseinheit (20) dazu ausgebildet ist, eine Bestellung zu verarbeiten und Steuerungsdaten an ein Behälterlager (21) mit gereinigten Mehrwegbehältern, an die Etikettiereinheit (22), an die wenigstens eine Befüllstation (23a, 23b, 23c, 23d, 23e), und/oder an die Kommissioniereinheit (24) zu übermitteln.

10. Verfahren zur Bereitstellung von Konsumgütern, insbesondere von abfüllbaren Lebensmitteln, umfassend die folgenden Schritte:
a) Bereitstellen eines Systems nach einem der Ansprüche 1 bis 9;
b) Befüllen wenigstens eines Mehrwegbehälters mit dem abfüllbaren Produkt in einer Befüllstation (23a, 23b, 23c, 23d, 23e); und
c) Transport des befüllten Mehrwegbehälters von der zentralen Kommissionierstation (2) zur Verbraucherstation (3); und
d) Rücktransport des Mehrwegbehälters von der Verbraucherstation (3) zur zentralen Kommissionierstation (2).

11. Verfahren nach Anspruch 10,
**dadurch gekennzeichnet, dass**
das Verfahren ein Zirkulieren der Mehrwegbehälter zwischen Verbaucherstationen (3) und der zentralen Kommissionierstation (2) umfasst.

12. Verfahren zur Bereitstellung von Konsumgütern, insbesondere von abfüllbaren Lebensmitteln, umfassend die folgenden Schritte:
a) Übertragung von Daten (b) zur Zusammenstellung eines Warenkorbs aus einer Vielzahl von Waren umfassend ein abfüllbares Produkt von der Verbraucherstation (3) zu einer Datenverarbeitungseinheit (20) einer Kommissionierstation (2);
b) Übertragung von Steuerungsdaten (c) von der Datenverarbeitungseinheit (20) an ein Behälterlager (21) zur Auswahl eines für das bestellte abfüllbare Produkt geeigneten Mehrwegbehälters;
**gekennzeichnet durch** die Schritte:
c) Befüllen des Mehrwegbehälters mit dem abfüllbaren Produkt in einer Befüllstation (23a, 23b, 23c, 23d, 23e); und
d) Zusammenstellung des bestellten Warenkorbs unter Einschluss des bestellten befüllten Mehrwegbehälters in einer Kommissioniereinheit (24).

13. Verfahren nach Anspruch 12,
**dadurch gekennzeichnet, dass**
das Verfahren als weiteren Schritt die Übertragung von Steuerungsdaten (d) an eine Etikettiereinheit (22) zum Erstellen und/oder Anbringen eines dem bestellten abfüllbaren Produkt entsprechenden Etiketts an den im Schritt b) ausgewählten Mehrwegbehälter umfasst.

14. Verfahren nach Anspruch 10 bis 13,
**dadurch gekennzeichnet, dass**
das Verfahren als weiteren Schritt den Transfer des in der Kommissioniereinheit (24) zusammengestellten Warenkorbs an eine Auslieferungseinheit (25) zur Auslieferung an eine durch die Bestellung vorgegebene Verbraucherstation (3) aufweist.

15. Verfahren nach einem der Ansprüche 10 bis 14,
**dadurch gekennzeichnet, dass**
das Verfahren als weiteren Schritt den Transfer eines von der Verbraucherstation (3) zur Kommissionierstation (2) zurück transferierten Mehrwegbehälters von einer Leergutaufnahmeeinheit (26) zu einer Wasch-/ Sterilisiereinheit (27) zum Waschen und/oder Sterilisieren des Mehrwegbehälters aufweist.

## Geänderte Patentansprüche

### Geänderte Patentansprüche gemäss Regel 137(2) EPÜ.

1. System (1) zur Bereitstellung von Konsumgütern, insbesondere von abfüllbaren Lebensmitteln, umfassend:
eine Vielzahl von dezentralen Verbraucherstationen (3); und
eine zentrale Kommissionierstation (2) zur Kommissionierung von Waren zur Erstellung des bestellten Warenkorbs,
**dadurch gekennzeichnet, dass**
das System (1) eine Vielzahl standardisierter Mehrwegbehälter umfasst, und die Kommissionierstation (2) wenigstens eine Befüllstation (23a, 23b, 23c, 23d, 23e) zum Befüllen eines der Mehrwegbehälters einem abfüllbaren Produkt aufweist und die Verbraucherstationen (3) zur Aufnahme wenigstens eines der befüllten Mehrwegbehälters geeignet sind, und wobei die Mehrwegbehälter im System zwischen den Verbraucherstationen (3) und der zentralen Kommissionierstation (2) zirkulieren.

2. System (1) nach Anspruch 1,
**dadurch gekennzeichnet, dass**
die Verbraucherstation (3) eine Eingabeeinheit zur Bestellung eines Warenkorbs aufweist, und die zentrale Kommissionierstation (2) eine Datenverarbeitungseinheit (20) zur Erfassung von Bestellungen eines Warenkorbs mit wenigsten einem abfüllbaren Produkt seitens der Verbraucherstation (3) aufweist.

3. System (1) zur Bereitstellung von Konsumgütern, insbesondere von abfüllbaren Lebensmitteln, umfassend:
eine Verbraucherstation (3) mit einer Eingabeeinheit zur Bestellung eines Warenkorbs; und
eine zentrale Kommissionierstation (2) zur Kommissionierung von Waren zur Erstellung des bestellten Warenkorbs,
wobei die zentrale Kommissionierstation (2) eine Datenverarbeitungseinheit (20) zur Erfassung von Bestellungen eines Warenkorbs mit wenigsten einem abfüllbaren Produkt seitens der Verbraucherstation (3) aufweist;
**dadurch gekennzeichnet, dass**
das System (1) eine Vielzahl standardisierter Mehrwegbehälter umfasst, und die Kommissionierstation (2) wenigstens eine Befüllstation (23a, 23b, 23c, 23d, 23e) zum Befüllen eines der Mehrwegbehälters mit dem bestellten abfüllbaren Produkt aufweist.

4. System (1) nach einem der vorhergehenden Ansprüche,
**dadurch gekennzeichnet, dass**
die wenigstens eine Befüllstation (23a, 23b, 23c, 23d, 23e) einen Behälter, einen Tank und/oder ein Silo zur Lagerung des abfüllbaren Produkts aufweist.

5. System (1) nach einem der vorhergehenden Ansprüche,
**dadurch gekennzeichnet, dass**
die Kommissionierstation (2) wenigstens eine Etikettiereinheit (22) zum Erstellen und/oder Anbringen eines Etiketts an dem Mehrwegbehälter aufweist.

6. System (1) nach einem der vorhergehenden Ansprüche,
**dadurch gekennzeichnet, dass**
die Kommissionierstation (2) wenigstens eine Kommissioniereinheit (24) zur Zusammenstellung des bestellten Warenkorbs unter Einschluss des bestellten befüllten Mehrwegbehälters aufweist.

7. System (1) nach einem der vorhergehenden Ansprüche,
**dadurch gekennzeichnet, dass**
die Kommissionierstation (2) wenigstens eine Wasch-/ Sterilisiereinheit (27) zum Waschen und/oder Sterilisieren gebrauchter, von den Verbraucherstationen (3) in die Kommissionierstation (2) zurück transportierter Mehrwegbehälter aufweist.

8. System (1) nach einem der vorhergehenden Ansprüche,
**dadurch gekennzeichnet, dass**
die Datenverarbeitungseinheit (20) dazu ausgebildet ist, eine Bestellung zu verarbeiten und Steuerungsdaten an ein Behälterlager (21) mit gereinigten Mehrwegbehältern, an die Etikettiereinheit (22), an die wenigstens eine Befüllstation (23a, 23b, 23c, 23d, 23e), und/oder an die Kommissioniereinheit (24) zu übermitteln.

9. Verfahren zur Bereitstellung von Konsumgütern, insbesondere von abfüllbaren Lebensmitteln, umfassend die folgenden Schritte:
a) Bereitstellen eines Systems nach einem der Ansprüche 1 bis 8;
b) Befüllen wenigstens eines Mehrwegbehälters mit dem abfüllbaren Produkt in einer Befüllstation (23a, 23b, 23c, 23d, 23e); und
c) Transport des befüllten Mehrwegbehälters von der zentralen Kommissionierstation (2) zur Verbraucherstation (3); und
d) Rücktransport des Mehrwegbehälters von der Verbraucherstation (3) zur zentralen Kommissionierstation (2).

10. Verfahren nach Anspruch 9,
**dadurch gekennzeichnet, dass**
das Verfahren ein Zirkulieren der Mehrwegbehälter zwischen Verbraucherstationen (3) und der zentralen Kommissionierstation (2) umfasst.

11. Verfahren zur Bereitstellung von Konsumgütern, insbesondere von abfüllbaren Lebensmitteln, umfassend die folgenden Schritte:
a) Übertragung von Daten (b) zur Zusammenstellung eines Warenkorbs aus einer Vielzahl von Waren umfassend ein abfüllbares Produkt von einer dezentralen Verbraucherstation (3) zu einer Datenverarbeitungseinheit (20) einer zentralen Kommissionierstation (2);
b) Übertragung von Steuerungsdaten (c) von der Datenverarbeitungseinheit (20) an ein Behälterlager (21) zur Auswahl eines für das bestellte abfüllbare Produkt geeigneten Mehrwegbehälters;
**gekennzeichnet durch** die Schritte:
c) Befüllen des Mehrwegbehälters mit dem abfüllbaren Produkt in einer Befüllstation (23a, 23b, 23c, 23d, 23e); und
d) Zusammenstellung des bestellten Warenkorbs unter Einschluss des bestellten befüllten Mehrwegbehälters in einer Kommissioniereinheit (24)
e) Transfer des zusammengestellten Warenkorbs an die Verbrauchsstation (3).

12. Verfahren nach Anspruch 11,
**dadurch gekennzeichnet, dass**
das Verfahren als weiteren Schritt die Übertragung von Steuerungsdaten (d) an eine Etikettiereinheit (22) zum Erstellen und/oder Anbringen eines dem bestellten abfüllbaren Produkt entsprechenden Etiketts an den im Schritt b) ausgewählten Mehrwegbehälter umfasst.

13. Verfahren nach Anspruch 9 bis 12,
**dadurch gekennzeichnet, dass**
der Transfer des Schritts e) des in der Kommissioniereinheit (24) zusammengestellten Warenkorbs an eine Auslieferungseinheit (25) zur Auslieferung an eine durch die Bestellung vorgegebene Verbraucherstation (3) aufweist.

14. Verfahren nach einem der Ansprüche 9 bis 13,
**dadurch gekennzeichnet, dass**
das Verfahren als weiteren Schritt den Transfer eines von der Verbraucherstation (3) zur Kommissionierstation (2) zurück transferierten Mehrwegbehälters von einer Leergutaufiiahmeeinheit (26) zu einer Wasch-/ Sterilisiereinheit (27) zum Waschen und/oder Sterilisieren des Mehrwegbehälters aufweist.
